# FASCICULE DE BREVET EUROPEEN

(11) **EP 3 075 295 B1**
(45) Date de publication et mention de la délivrance du brevet: **01.11.2017**
(21) Numéro de dépôt: 16162967.0
(22) Date de dépôt: 30.03.2016
(51) Int. Cl.: A47J 43/046, A47J 43/07, B26D 1/29

(54) **APPAREIL ELECTROMENAGER DE PREPARATION CULINAIRE COMPORTANT UN COUVERCLE MUNI D'UNE CHEMINEE POUR L'INTRODUCTION D'ALIMENTS**
ELEKTROHAUSHALTSGERÄT ZUR ESSENSZUBEREITUNG, DAS EINEN DECKEL MIT EINEM ABZUG ZUM EINFÜLLEN VON LEBENSMITTELN UMFASST
KITCHEN APPLIANCE COMPRISING A LID WITH A SHAFT FOR INSERTING FOOD

(30) Priorité: 01.04.2015 FR 1552820
(43) Date de publication de la demande: 05.10.2016
(73) Titulaire: SEB S.A., 69130 Ecully (FR)
(72) Inventeur: DESHAYES, Jean-Louis, 53700 AVERTON (FR); BEAUDET, Jean-Yves, 61410 HALEINE (FR)
(74) Mandataire: Bourrières, Patrice

(56) Documents cités:
- EP-A1- 0 076 712
- EP-A1- 2 721 979
- FR-A1- 2 939 298
- FR-A1- 2 942 985
- GB-A- 1 400 240

## Description

La présente invention se rapporte au domaine technique général des appareils électroménagers de préparation culinaire comportant un couvercle venant fermer de manière amovible un récipient de travail recevant un outil entraîné en rotation par un moteur et se rapporte plus particulièrement à un appareil dans lequel le couvercle comprend un corps muni d'une cheminée pour l'introduction des aliments disposée de manière excentrée sur le couvercle.

Il est connu, de la demande de brevet FR 2 769 197, un appareil de préparation culinaire comportant un couvercle venant fermer de manière amovible un récipient de travail recevant un outil entraîné en rotation par un moteur, le couvercle comprenant une cheminée pour l'introduction des aliments disposée de manière excentrée sur le couvercle. Dans ce document, le couvercle présente l'avantage de pouvoir être disposé selon n'importe quelle orientation sur le récipient de travail de sorte que la cheminée peut être disposée dans la position qui convient le mieux à l'utilisateur.

Cependant, un tel appareil présente l'inconvénient de posséder un dispositif de verrouillage du couvercle sur le récipient de travail qui est relativement complexe, encombrant et coûteux à mettre en oeuvre.

Il est également connu de la demande de brevet FR 2 939 298 un appareil de préparation culinaire comportant un couvercle venant fermer de manière amovible un récipient de travail et comprenant une cheminée disposée de manière excentrée sur le couvercle. Dans ce document, le couvercle comporte une couronne mobile qui permet de verrouiller le couvercle sur le récipient de travail.

Cependant, un tel appareil ne permet pas la découpe des légumes.

Aussi, un but de la présente invention est de remédier à ces inconvénients en proposant un appareil électroménager de préparation culinaire permettant la découpe des légumes et comportant un couvercle comprenant une cheminée pour l'introduction des aliments dans lequel la cheminée puisse être disposée selon n'importe quelle orientation et qui soit simple et économique à mettre en oeuvre.

A cet effet, l'invention se rapporte à un appareil électroménager de préparation culinaire comportant un couvercle venant fermer de manière amovible un récipient de travail recevant un outil entraîné en rotation par un moteur, le couvercle comprenant un corps muni d'une cheminée pour l'introduction d'aliments disposée de manière excentrée sur le couvercle, le couvercle comportant une couronne de verrouillage mobile en rotation sur le corps, la couronne de verrouillage pouvant occuper une position de fermeture dans laquelle des éléments de verrouillage assurent le maintien du couvercle en position fermée sur le récipient de travail et une position d'ouverture dans laquelle le couvercle peut être soulevé du récipient de travail, caractérisé en ce qu'il comporte un moyeu d'entrainement comprenant une extrémité inférieure venant s'accoupler de manière amovible à un entraineur disposé dans le fond du récipient de travail et une extrémité supérieure supportant un disque coupe légumes, le corps du couvercle comportant une couronne anti-déchet venant en bordure du disque coupe légumes lorsque le couvercle occupe la position fermée.

Un tel appareil présente l'avantage de posséder un couvercle dans lequel la cheminée peut être librement orientée par rapport à la couronne de verrouillage de sorte que la cheminée peut être disposée sur le récipient de travail dans la position qui convient le mieux à l'utilisateur. De plus, un tel couvercle présente l'avantage de posséder un système de verrouillage qui est simple, fiable et économique à mettre en oeuvre, tout en procurant une très bonne ergonomie d'utilisation.

Selon une autre caractéristique de l'invention, le corps du couvercle comporte un joint d'étanchéité, préférentiellement amovible, venant en appui contre le récipient de travail lorsque le couvercle occupe la position fermée.

Une telle caractéristique permet d'obtenir une fermeture étanche et d'éviter ainsi que des ingrédients ou de la vapeur ne s'échappent par un espace résultant entre le couvercle et le récipient de travail.

Selon une autre caractéristique de l'invention, le corps du couvercle comporte une jupe interne s'étendant sous le couvercle, la jupe interne supportant le joint d'étanchéité.

Selon une autre caractéristique de l'invention, le joint d'étanchéité est un joint à lèvres.

Selon une autre caractéristique de l'invention, la cheminée prend naissance au fond d'une cavité ménagée sur une surface supérieure du corps du couvercle.

Une telle caractéristique permet de recueillir dans la cavité tout liquide pouvant déborder par la cheminée, ou pouvant se former par condensation, et d'éviter ainsi que du liquide ne s'écoule le long des parois latérales du récipient puis pénètre dans le boîtier de l'appareil, avec le risque de détériorer l'appareil.

Selon encore une autre caractéristique de l'invention, la cavité comprend des ouvertures communiquant avec la face inférieure du couvercle.

Une telle caractéristique permet de réintroduire le liquide collecté dans la cavité dans l'enceinte du récipient de travail.

Selon encore une autre caractéristique de l'invention, l'appareil comporte un dispositif de chauffage permettant de chauffer le contenu du récipient de travail.

Une telle caractéristique permet d'obtenir un appareil réalisant la cuisson des aliments.

Selon une autre caractéristique de l'invention, le couvercle comprend deux poignées disposées symétriquement sur la couronne de verrouillage.

Une telle caractéristique permet d'offrir une bonne ergonomie dans la manipulation du couvercle.

Selon une autre caractéristique de l'invention, les deux poignées font radialement saillies en bordure du couvercle.

Selon une autre caractéristique de l'invention, le corps du couvercle comporte une nervure radiale annulaire qui est prise en sandwich entre un bord annulaire de la couronne de verrouillage et des brides de fixation fixées à la couronne de verrouillage.

Selon une autre caractéristique de l'invention, les éléments de verrouillage sont constitués par des pattes portées par la couronne de verrouillage qui assurent une liaison de type baïonnette avec le récipient de travail.

Selon une autre caractéristique de l'invention, le couvercle comporte un dispositif de blocage de la rotation du corps du couvercle par rapport à la couronne de verrouillage dans le sens de rotation de l'outil lorsque le couvercle est verrouillé sur le récipient de travail.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- les figures 1A et 1B sont des vues en perspective d'un appareil de préparation culinaire selon un mode particulier de réalisation de l'invention, la cheminée du couvercle étant illustrée dans deux positions distinctes sur ces deux vues ;
- la figure 2 est une vue en perspective de l'appareil de la figure 1 avec le couvercle et l'outil coupe légumes désengagés du récipient de travail ;
- la figure 3 est une vue en coupe partielle, longitudinale, de l'appareil de la figure 1B ;
- la figure 4 est une vue en perspective du couvercle de l'appareil de la figure 1B ;
- la figure 5 est une vue de dessus du couvercle de la figure 4 ;
- la figure 6 est une vue en coupe selon la ligne VI-VI de la figure 5 ;
- la figure 7 est une vue en perspective éclatée du couvercle de la figure 6 ;
- La figure 8 est une vue du corps du couvercle selon une variante de réalisation de l'invention ;
- La figure 9 est une vue en coupe du couvercle selon la variante de réalisation de la figure 8.

Seuls les éléments nécessaires à la compréhension de l'invention ont été représentés. Pour faciliter la lecture des dessins, les mêmes éléments portent les mêmes références d'une figure à l'autre.

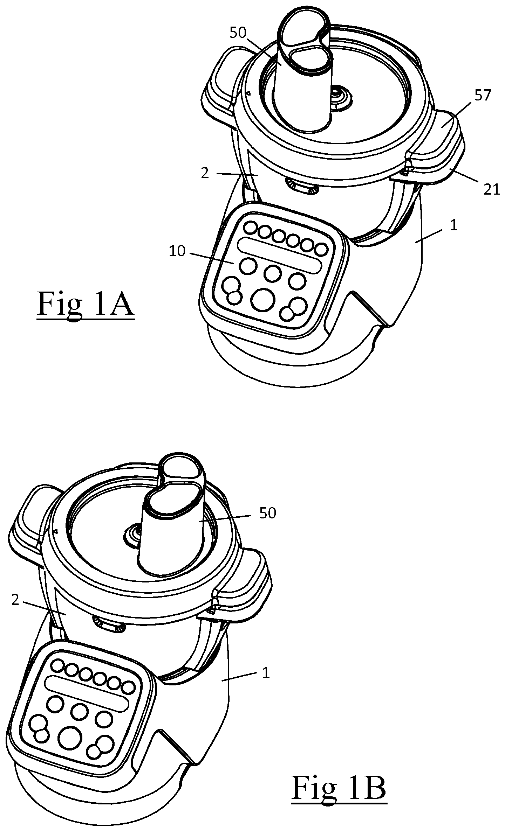

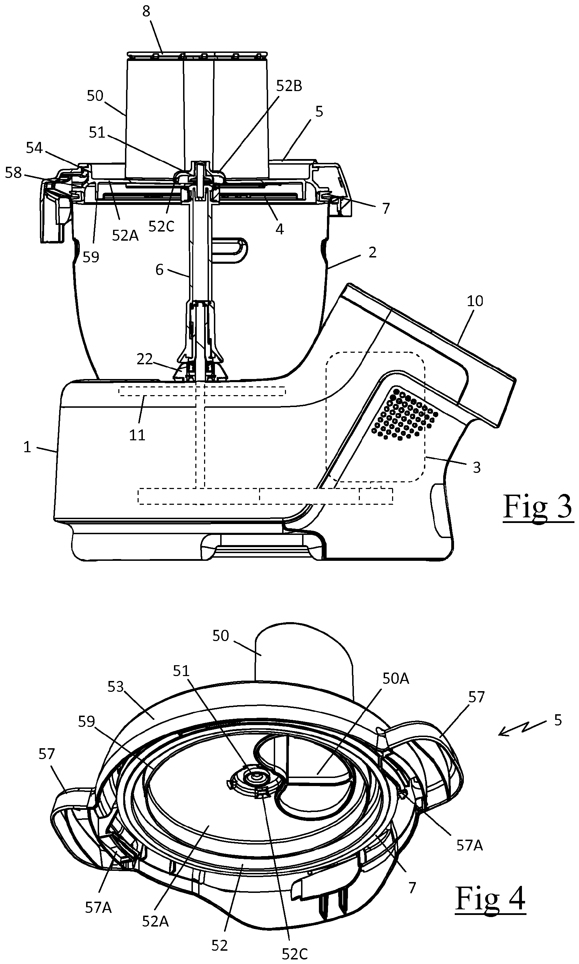

Les figures 1A, 1B, 2 et 3 représentent un appareil de préparation culinaire comportant un boîtier 1 et un récipient de travail 2 reposant de manière amovible sur le boîtier 1. Le boîtier 1 renferme un moteur 3 électrique, représenté schématiquement sur la figure 3, permettant l'entrainement en rotation d'un outil 4 dans le récipient de travail 2, et comporte une face avant munie d'un panneau de commande 10 permettant de contrôler le fonctionnement du moteur 3.

De manière préférentielle, le boîtier 1 est équipé d'une plaque chauffante 11 permettant de chauffer le contenu du récipient de travail 2, la plaque chauffante 11 et le moteur 3 étant pilotés par une carte électronique disposée sous le panneau de commande 10. De manière connue en soi, la carte électronique reçoit la valeur de la température mesurée par un palpeur de température et assure la régulation de l'alimentation de la plaque chauffante 11 de façon à amener le contenu du récipient de travail 2 à une température de consigne.

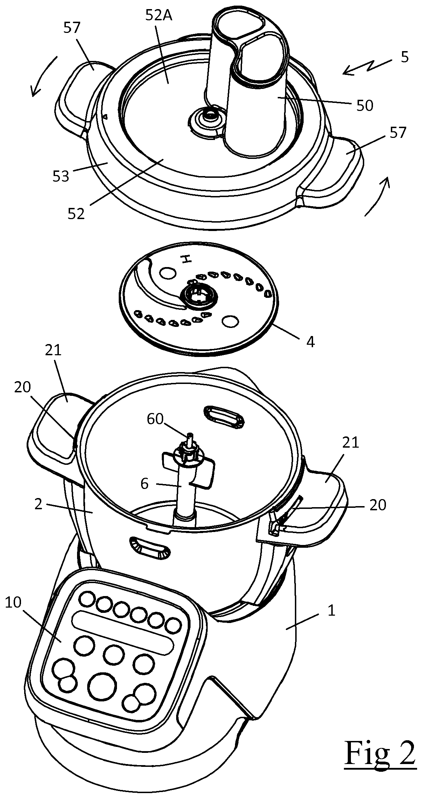

Le récipient de travail 2 comporte une extrémité supérieure fermée par un couvercle 5 amovible comprenant une cheminée 50 pour l'introduction des aliments et l'appareil est avantageusement muni d'un dispositif de sécurité couvercle, non visible sur les figures, qui interrompt le fonctionnement du moteur 3 lorsque le couvercle 5 n'est pas verrouillé sur le récipient de travail 2. Comme on peut le voir sur la figure 3, le récipient de travail 2 comporte un fond muni d'un entraineur 22 entrainé par le moteur 3 et l'appareil comporte un moyeu d'entrainement 6 comprenant une extrémité inférieure venant s'accoupler de manière amovible à l'entraineur 22 et une extrémité supérieure sur laquelle est accouplé de manière amovible l'outil 4, ce dernier étant, dans l'exemple illustré sur la figure 2, constitué par un disque réversible comprenant une face permettant de trancher les aliments et une face opposée permettant de râper les aliments.

Le moyeu d'entrainement 6 est avantageusement réalisé en matière plastique résistante à la chaleur, du type polyamide renforcé de fibres de verre ou polypropylène renforcé de fibres de verre, et comprend avantageusement une extrémité supérieure munie d'un axe métallique 60 venant s'insérer dans un palier de guidage 51 supporté par le couvercle 5, lorsque le couvercle 5 ferme le récipient de travail 2.

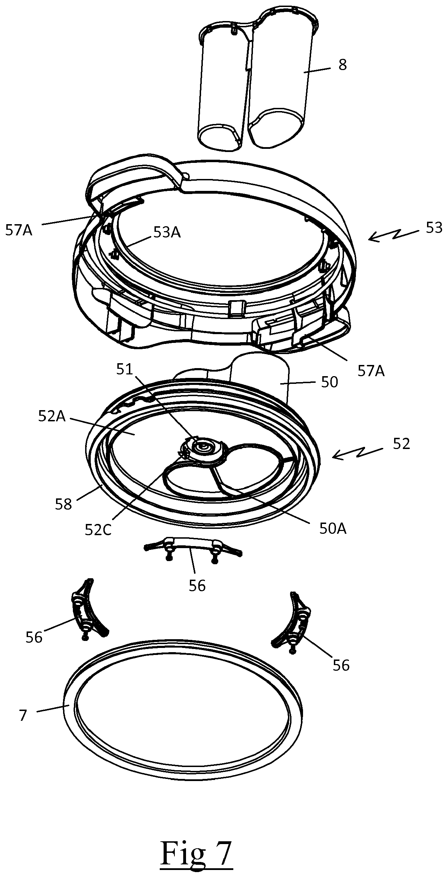

Comme on peut le voir sur les figures 4 à 7, le couvercle 5 comporte un corps 52 central préférentiellement en matériau plastique, du type polyamide ou polypropylène, dans lequel la cheminée 50 pour l'introduction des aliments est intégrée au moulage, et comprend une couronne de verrouillage 53 périphérique, qui est montée mobile en rotation sur le corps 52 du couvercle 5.

A cet effet, le corps 52 central comprend une paroi cylindrique 54 comportant un bord supérieur 54A circulaire venant guider en rotation la couronne de verrouillage 53 en s'engageant dans une ouverture centrale de la couronne de verrouillage 53 de diamètre complémentaire, la paroi cylindrique 54 supportant une nervure radiale annulaire 55 qui est prise en sandwich entre un bord annulaire 53A de la couronne de verrouillage 53, entourant l'ouverture centrale, et des brides de fixations 56 fixées sous la couronne de verrouillage 53.

L'assemblage ainsi réalisé permet la libre rotation de la couronne de verrouillage 53 sur le corps 52 sur 360°, la couronne de verrouillage 53 comprenant deux pattes de verrouillage 57A disposées à l'opposée l'une de l'autre et destinées à venir s'engager par rotation dans des fentes 20 ménagées dans des poignées de préhension 21 du récipient de travail 2 pour établir une liaison de type baïonnette, lorsque la couronne de verrouillage 53 occupe une position de fermeture illustrée sur les figures 1A et 1B.

Les deux pattes de verrouillage 57A sont avantageusement disposées sous deux poignées 57 du couvercle 5 qui viennent dans l'alignement des poignées de préhension 21 du récipient de travail 2 lorsque la couronne de verrouillage 53 occupe la position de fermeture, l'une des pattes de verrouillage 57A venant, de manière connue en soi, actionner une tige de commande du dispositif de sécurité couvercle lorsque la couronne de verrouillage 53 occupe la position de fermeture.

Comme on peut le voir sur les figures 3 à 6, le corps 52 du couvercle comporte une paroi de fond 52A circulaire qui vient fermer l'extrémité inférieure de la paroi cylindrique 54 et qui supporte une jupe interne 58 s'étendant sous le couvercle 5. La jupe interne 58 présente une forme divergente et comprend une rainure périphérique recevant un joint 7 d'étanchéité comprenant une lèvre venant reposer sur un bord supérieur du récipient de travail 2 lorsque le couvercle 5 ferme le récipient de travail 2.

Le corps 52 du couvercle comporte également une couronne anti-déchet 59 qui prend naissance sur la face inférieure de la paroi de fond 52A et présente un diamètre inférieur au diamètre de la jupe interne 58, le diamètre de la couronne anti-déchet 59 étant adapté pour que cette dernière vienne en bordure du disque 4, ainsi que cela est illustré sur la figure 3, lorsque le couvercle 5 ferme le récipient de travail 2. Une telle couronne anti-déchet 59 permet d'éviter que des morceaux de légumes, non encore traités par le disque 4 et situés entre le disque 4 et la paroi de fond 52A du couvercle, ne puissent s'échapper par la périphérie du disque 4.

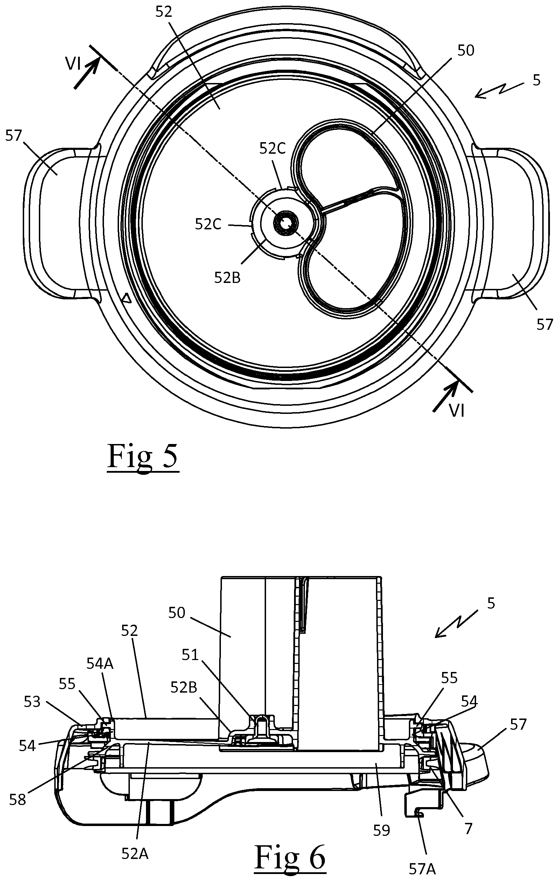

Conformément aux figures 5 à 7, la cheminée 50 pour l'introduction des aliments du couvercle 5 est intégrée au corps 52 et fait saillie verticalement sur la surface supérieure de la paroi de fond 52A, la paroi de fond 52A et la paroi cylindrique 54 du corps 52 définissant une cavité au pied de la cheminée 50 dans laquelle tout liquide s'écoulant en bordure de la cheminée 50 peut être récupéré.

Comme on peut mieux le voir sur la figure 6, la cheminée 50 occupe une position excentrée sur le couvercle 5 et présente une section transversale externe en forme de haricot s'étendant autour d'un dôme 52B ménagé au centre du couvercle 5, le dôme 52B supportant le palier de guidage 51 et comprenant des ouvertures 52C latérales traversantes permettant de réintroduire dans le récipient de travail 2 le liquide récupéré dans la cavité.

De manière avantageuse, le couvercle 5 comporte, de manière connue en soi, une paroi de séparation 50A s'étendant verticalement dans la cheminée 50 pour séparer la cheminée 50 en deux zones de section de passage distinctes: une première zone de section de passage plus importante destinée à recevoir les légumes de plus grande taille et une deuxième zone de section de passage réduite destinée à recevoir des légumes de plus petite taille.

Le couvercle 5 comporte également un poussoir 8 venant s'engager dans la cheminée 50 et présentant une forme complémentaire de la cheminée 50 avec deux lobes séparés l'un de l'autre par un espace permettant l'insertion de la paroi de séparation 50A.

Le fonctionnement de l'appareil va maintenant être décrit.

Lorsque l'utilisateur souhaite couper des légumes à l'aide de l'appareil, il engage le moyeu d'entrainement 6 sur l'entraineur 22 faisant saillie au fond du récipient de travail 2, puis il dispose le disque 4 sur l'extrémité supérieure du moyeu d'entrainement 6. Il prend alors le couvercle 5 puis il l'amène au dessus du récipient de travail 2 en orientant la cheminée 50 dans la position qui lui convient le mieux, tout en s'assurant que les deux poignées 57 du couvercle 5 se trouvent bien décalées angulairement des poignées de préhension 21 du récipient de travail 2. L'utilisateur peut alors poser le couvercle 5 sur le récipient de travail 2 de manière à ce que l'axe métallique 60 du moyeu d'entrainement 6 se trouve engagé dans le palier de guidage 51, ce dernier comprenant avantageusement une extrémité inférieure munie d'une paroi convergente assurant un centrage automatique de l'axe métallique 60 dans le palier de guidage 51.

Le couvercle 5 repose alors sur le récipient de travail 2 avec le joint 7 au contact du bord supérieur du récipient de travail 2 et la cheminée 50 orientée selon le désir de l'utilisateur, une modification de cette orientation pouvant toujours être effectuée en soulevant légèrement le couvercle 5 pour soulager la pression sur le joint 7 et en faisant tourner uniquement le corps 52 comportant la cheminée 50.

L'utilisateur peut alors verrouiller le couvercle 5 en position fermée en saisissant les deux poignées 57 du couvercle 5 et en faisant tourner la couronne de verrouillage 53 dans le sens trigonométrique, illustré par des flèches sur la figure 2, de manière à amener les deux poignées 57 du couvercle 5 dans l'alignement des poignées de préhension 21 du récipient de travail 2, le corps 52 central du couvercle 5 restant immobile lors de cette rotation grâce à l'adhérence s'établissant entre le joint 7 d'étanchéité et le bord supérieur du récipient de travail 2.

La rotation de la couronne de verrouillage 53 provoque le verrouillage du couvercle 5 sur le récipient de travail 2, par l'engagement des pattes de verrouillage 57A dans les fentes 20 des poignées de préhension 21, qui s'accompagne de l'exercice d'une pression sur le joint 7 garantissant l'étanchéité entre le couvercle 5 et le récipient de travail 2, l'engagement de l'une des pattes de verrouillage 57A dans l'une des fentes 20 établissant simultanément l'actionnement du dispositif de sécurité couvercle.

Le moteur 3 de l'appareil peut alors être mis en marche en appuyant sur un bouton disposé sur le panneau de commande 10 et les légumes à traiter peuvent être introduits dans l'une ou l'autre des zones de la cheminée 50, les légumes découpés ou râpés par le disque 4 tombant alors dans le fond du récipient de travail 2.

De façon simultanée au fonctionnement du moteur 3 et/ou successivement à l'arrêt de ce dernier, la plaque chauffante 11 du récipient de travail 2 peut être mise en fonctionnement pour assurer la cuisson des aliments présents dans le récipient de travail 2, la présence du joint 7 d'étanchéité sur le couvercle 5 évitant alors que de la vapeur ne s'échappe à la jonction entre le bord supérieur du récipient de travail 2 et le couvercle 5.

De plus, tout éventuel liquide s'échappant par la cheminée 50 lors de la rotation de l'outil et/ou lors de la cuisson est récupéré dans la cavité puis recyclé à l'intérieur du récipient par les ouvertures 52C ménagées dans le couvercle 5.

Lorsque l'utilisateur souhaite avoir accès au contenu du récipient de travail 2, il lui suffit de tourner la couronne de verrouillage 53 en sens inverse, pour l'amener dans une position d'ouverture dans laquelle les pattes de verrouillage 57A sont désengagées des fentes 20 des poignées de préhension 21, puis de soulever le couvercle 5 par les poignées 57.

L'appareil ainsi réalisé comporte donc un couvercle 5 qui procure une très grande ergonomie d'utilisation, le couvercle 5 présentant l'avantage d'être muni d'une cheminée 50 excentrée dont l'orientation peut être facilement ajustée par l'utilisateur avant le verrouillage du couvercle 5 et qui peut être facilement verrouillé sur le récipient de travail 2 par une simple rotation de la couronne de verrouillage 53. En particulier, un tel appareil présente l'avantage de procurer une ergonomie d'utilisation équivalente que l'utilisateur soit droitier ou gaucher, la cheminée 50 pouvant indifféremment être amenée sur le côté gauche ou droit de l'appareil, ainsi que cela est illustré respectivement sur les figures 1A et 1B.

De plus, un tel couvercle 5 présente également l'avantage de procurer une bonne étanchéité à la jonction entre le couvercle 5 et le récipient de travail 2, tout en nécessitant seulement un faible effort de la part de l'utilisateur pour assurer le verrouillage du couvercle 5.

Enfin, l'appareil équipé d'un tel couvercle 5 pourra être utilisé pour couper, râper ou trancher des aliments mais également pour les cuire sans qu'il y ait besoin de transvaser les ingrédients d'un récipient à un autre, ces opérations pouvant être effectuées simultanément ou successivement.

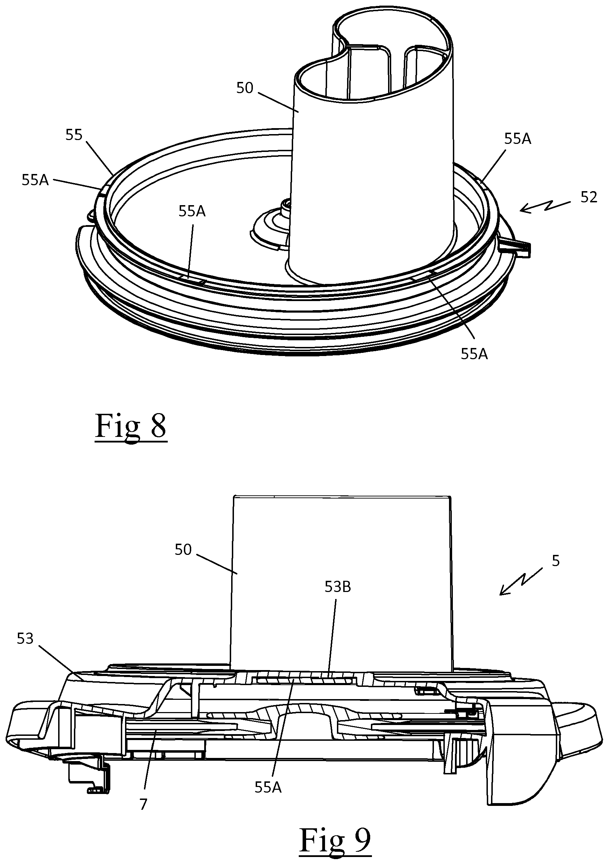

Dans une variante de réalisation représentée sur les figures 8 et 9, la rotation du corps 52 du couvercle par rapport à la couronne de verrouillage 53 sera avantageusement bloquée dans le sens de rotation de l'outil 4 par un dispositif de blocage. Ce dispositif de blocage est avantageusement constitué par plusieurs crans 55A régulièrement répartis sur la surface supérieure de la nervure radiale annulaire 55 qui coopèrent avec des crans 53B ménagés sur la surface inférieure de la couronne de verrouillage 53.

Dans l'exemple illustré, les crans 55A et 53B comportent, d'un côté, une face de glissement qui s'étend sensiblement parallèlement au plan de fermeture du couvercle 5 et, de l'autre côté, une face de blocage qui s'étend perpendiculairement au plan de fermeture du couvercle 5 de sorte que les faces de blocage viennent buter l'une contre l'autre lorsque le corps 52 du couvercle est entrainé en rotation dans le sens de rotation de l'outil 4 et que les faces de glissement passent librement l'une sur l'autre lorsque le corps 52 du couvercle est entrainé dans le sens inverse de rotation de l'outil 4.

Une telle caractéristique permet d'éviter que, lors du fonctionnement de l'appareil, le corps 52 du couvercle 5 ne soit entrainé en rotation par le flux rotatif des aliments engendré par la rotation de l'outil 4.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation non représentée, la cheminée pour l'introduction des aliments pourra présenter une section de passage circulaire.

Ainsi, dans une variante de réalisation non représentée, l'étanchéité du couvercle pourra être réalisée à l'aide d'un joint torique.

Ainsi dans encore une autre variante de réalisation non présentée, l'appareil pourra comporter un racleur, solidaire du moyeu d'entrainement supportant le disque, permettant de racler la paroi interne du récipient de travail.

## Revendications

1. Appareil électroménager de préparation culinaire comportant un couvercle (5) venant fermer de manière amovible un récipient de travail (2) recevant un outil (4) entraîné en rotation par un moteur (3), le couvercle (5) comprenant un corps (52) muni d'une cheminée (50) pour l'introduction d'aliments disposée de manière excentrée sur le couvercle (5), le couvercle (5) comportant une couronne de verrouillage (53) mobile en rotation sur ledit corps (52), la couronne de verrouillage (53) pouvant occuper une position de fermeture dans laquelle des éléments de verrouillage (57A) assurent le maintien du couvercle (5) en position fermée sur le récipient de travail (2) et une position d'ouverture dans laquelle le couvercle peut être soulevé du récipient de travail (2), **caractérisé en ce qu'**il comporte un moyeu d'entrainement (6) comprenant une extrémité inférieure venant s'accoupler de manière amovible à un entraineur (22) disposé dans le fond du récipient de travail (2) et une extrémité supérieure supportant un disque (4) coupe légumes, le corps (52) du couvercle comportant une couronne anti-déchet (59) venant en bordure du disque (4) coupe légumes lorsque le couvercle (5) occupe la position fermée.

2. Appareil électroménager de préparation culinaire selon la revendication 1, **caractérisé en ce que** le corps (52) du couvercle comporte un joint (7) d'étanchéité, préférentiellement amovible, venant en appui contre le récipient de travail (2) lorsque le couvercle (5) occupe la position fermée.

3. Appareil électroménager de préparation culinaire selon la revendication 2, **caractérisé en ce que** le corps (52) du couvercle comporte une jupe interne (58) s'étendant sous le couvercle (5), la jupe interne (58) supportant le joint (7) d'étanchéité.

4. Appareil électroménager de préparation culinaire selon l'une quelconque des revendications 1 à 3, **caractérisé en ce que** la cheminée (50) prend naissance au fond d'une cavité ménagée sur une surface supérieure du corps (52) du couvercle.

5. Appareil électroménager de préparation culinaire selon la revendication 4, **caractérisé en ce que** la cavité comprend des ouvertures (52C) communiquant avec la face inférieure du couvercle (5).

6. Appareil électroménager de préparation culinaire selon l'une quelconque des revendications 1 à 5, **caractérisé en ce qu'**il comporte un dispositif de chauffage (11) permettant de chauffer le contenu du récipient de travail (2).

7. Appareil électroménager de préparation culinaire selon l'une quelconque des revendications 1 à 6, **caractérisé en ce que** le couvercle (5) comprend deux poignées (57) disposées symétriquement sur la couronne de verrouillage (53).

8. Appareil électroménager de préparation culinaire selon la revendication 7, **caractérisé en ce que** les deux poignées (57) font radialement saillies en bordure du couvercle (5).

9. Appareil électroménager de préparation culinaire selon l'une quelconque des revendications 1 à 8, **caractérisé en ce que** le corps (52) du couvercle comporte une nervure radiale annulaire (55) qui est prise en sandwich entre un bord annulaire (53A) de la couronne de verrouillage (53) et des brides de fixation (56) fixées à la couronne de verrouillage (53).

10. Appareil électroménager de préparation culinaire selon l'une quelconque des revendications 1 à 9, **caractérisé en ce que** les éléments de verrouillage (57A) sont constitués par des pattes portées par la couronne de verrouillage (53) qui assurent une liaison de type baïonnette avec le récipient de travail (2).

11. Appareil électroménager de préparation culinaire selon l'une quelconque des revendications 1 à 10, **caractérisé en ce que** le couvercle (5) comporte un dispositif (53A, 53B) de blocage de la rotation du corps (52) du couvercle par rapport à la couronne de verrouillage (53) dans le sens de rotation de l'outil (4) lorsque le couvercle (5) est verrouillé sur le récipient de travail (2).

## Patentansprüche

1. Elektrisches Haushaltsgerät zur Nahrungsmittelzubereitung, das eine Abdeckung (5) umfasst, die lösbar einen Arbeitsbehälter (2) verschließt, der ein Werkzeug (4) aufnimmt, das durch einen Motor (3) in Drehung angetrieben wird, wobei die Abdeckung (5) einen Körper (52) umfasst, der mit einem Schacht (50) für die Einführung von Nahrungsmitteln ausgestattet ist, der exzentrisch auf der Abdeckung (5) angeordnet ist, wobei die Abdeckung (5) einen Verriegelungskranz (53) umfasst, der auf dem Körper (52) drehbar ist, wobei der Verriegelungskranz (53) eine geschlossene Position, in der Verriegelungselemente (57A) das Beibehalten der Abdeckung (5) in der geschlossenen Position auf dem Arbeitsbehälter (2) sicherstellen, und eine offene Position einnehmen kann, in der die Abdeckung von dem Arbeitsbehälter (2) abgehoben werden kann, **dadurch gekennzeichnet, dass** es eine Antriebsnabe (6) umfasst, die ein unteres Ende, das lösbar mit einem Antrieb (22) gekoppelt ist, der in dem Boden des Arbeitsbehälters (2) angeordnet ist, und ein oberes Ende umfasst, das eine Scheibe (4) zum Schneiden von Gemüse trägt, wobei der Körper (52) der Abdeckung einen Antiabfallkranz (59) umfasst, der an den Rand der Scheibe (4) zum Schneiden von Gemüse kommt, wenn die Abdeckung (5) die geschlossene Position einnimmt.

2. Elektrisches Haushaltsgerät zur Nahrungszubereitung nach Anspruch 1, **dadurch gekennzeichnet, dass** der Körper (52) der Abdeckung eine vorzugsweise abnehmbare Dichtung (7) umfasst, die gegen den Arbeitsbehälter (2) anstößt, wenn die Abdeckung (5) die geschlossene Position einnimmt.

3. Elektrisches Haushaltsgerät zur Nahrungszubereitung nach Anspruch 2, **dadurch gekennzeichnet, dass** der Körper (52) der Abdeckung eine innere Schürze (58) aufweist, die sich unter der Abdeckung (5) erstreckt, wobei die innere Schürze (58) die Dichtung (7) trägt.

4. Elektrisches Haushaltsgerät zur Nahrungszubereitung nach einem der Ansprüche 1 bis 3, **dadurch gekennzeichnet, dass** der Schacht (50) von dem Boden eines Hohlraums ausgeht, die auf einer oberen Oberfläche des Körpers (52) der Abdeckung ausgebildet ist.

5. Elektrisches Haushaltsgerät zur Nahrungsmittelzubereitung nach Anspruch 4, **dadurch gekennzeichnet, dass** der Hohlraum Öffnungen (52C) umfasst, die mit der Unterseite der Abdeckung (5) in Verbindung stehen.

6. Elektrisches Haushaltsgerät zur Nahrungszubereitung nach einem der Ansprüche 1 bis 5, **dadurch gekennzeichnet, dass** es eine Heizvorrichtung (11) aufweist, die es ermöglicht, den Inhalt des Arbeitsbehälters (2) zu erhitzen.

7. Elektrisches Haushaltsgerät zur Nahrungszubereitung nach einem der Ansprüche 1 bis 6, **dadurch gekennzeichnet, dass** die Abdeckung (5) zwei Griffe (57) umfasst, die symmetrisch auf dem Verriegelungskranz (53) angeordnet sind.

8. Elektrisches Haushaltsgerät zur Nahrungszubereitung nach Anspruch 7, **dadurch gekennzeichnet, dass** die zwei Griffe (57) radiale Vorsprünge am Rand der Abdeckung (5) bilden.

9. Elektrisches Haushaltsgerät zur Nahrungszubereitung nach einem der Ansprüche 1 bis 8, **dadurch gekennzeichnet, dass** der Körper (52) der Abdeckung eine ringförmige radiale Rippe (55) aufweist, die zwischen einem ringförmigen Rand (53A) des Verriegelungskranzes (53) und Befestigungsflanschen (56) eingeklemmt ist, die an dem Verriegelungskranz (53) befestigt sind.

10. Elektrisches Haushaltsgerät zur Nahrungszubereitung nach einem der Ansprüche 1 bis 9, **dadurch gekennzeichnet, dass** die Verriegelungselemente (57A) aus Klauen bestehen, die von dem Verriegelungskranz (53) getragen werden, der eine Verbindung vom Typ Bajonett mit dem Arbeitsbehälter (2) sicherstellt.

11. Elektrisches Haushaltsgerät zur Nahrungszubereitung nach einem der Ansprüche 1 bis 10, **dadurch gekennzeichnet, dass** die Abdeckung (5) eine Vorrichtung (53A, 53B) zum Blockieren der Drehung des Körpers (52) der Abdeckung relativ zu dem Verriegelungskranz (53) in der Drehrichtung des Werkzeugs (4) umfasst, wenn die Abdeckung (5) auf dem Arbeitsbehälter (2) verriegelt ist.

## Claims

1. Household food preparation appliance comprising a lid (5) that closes, in a removable manner, a working container (2) housing a tool (4) that is driven in rotation by a motor (3), the lid (5) comprising a body (52) provided with a shaft (50) for inserting food, positioned in an off-centre manner on the lid (5), the lid (5) comprising a locking ring (53) capable of moving in rotation on said body (52), the locking ring (53) capable of taking on a closing position in which locking elements (57A) maintain the lid (5) in the closed position on the working container (2) and an open position in which the lid can be lifted off of the working container (2), **characterised in that** it comprises a drive hub (6) including a lower end that is coupled in a removable manner to a drive (22) positioned in the bottom of the working container (2) and an upper end supporting a vegetable cutting disc (4), the body (52) of the lid comprising a waste-reducing ring (59) bordering the vegetable cutting disc (4) when the lid (5) is in the closed position.

2. Household food preparation appliance according to claim 1, **characterised in that** the body (52) of the lid comprises a gasket (7) that is preferably capable of being removed, resting against the working container (2) when the lid (5) is in the closed position.

3. Household food preparation appliance according to claim 2, **characterised in that** the body (52) of the lid comprises an inner skirt (58) extending beneath the lid (5), the inner skirt (58) supporting the gasket (7).

4. Household food preparation appliance according to any of claims 1 to 3, **characterised in that** the shaft (50) originates from the bottom of a cavity provided on an upper surface of the body (52) of the lid.

5. Household food preparation appliance according to claim 4, **characterised in that** the cavity comprises openings (52C) communicating with the lower side of the lid (5).

6. Household food preparation appliance according to any of claims 1 to 5, **characterised in that** it comprises a heating device (11) for heating the contents of the working container (2).

7. Household food preparation appliance according to any of claims 1 to 6, **characterised in that** the lid (5) comprises two handles (57) positioned symmetrically on the locking ring (53).

8. Household food preparation appliance according to claim 7, **characterised in that** the two handles (57) radially protrude at the border of the lid (5).

9. Household food preparation appliance according to any of claims 1 to 8, **characterised in that** the body (52) of the lid comprises an annular radial rib (55) that is sandwiched between an annular edge (53A) of the locking ring (53) and fastening clips (56) fastened to the locking ring (53).

10. Household food preparation appliance according to any of claims 1 to 9, **characterised in that** the locking elements (57A) are formed from lugs borne by the locking ring (53) that create a bayonet-type connection with the working container (2).

11. Household food preparation appliance according to any of claims 1 to 10, **characterised in that** the lid (5) comprises a device (53A, 53B) for blocking the rotation of the body (52) of the lid relative to the locking ring (53) in the direction of rotation of the tool (4) when the lid (5) is locked onto the working container (2).
